Europäisches Patentamt

European Patent Office

Office européen des brevets

(19)

(11) Veröffentlichungsnummer : **0 170 110**
**B1**

(12) **EUROPÄISCHE PATENTSCHRIFT**

(45) Veröffentlichungstag der Patentschrift :
03.01.90

(21) Anmeldenummer : 85108419.4

(22) Anmeldetag : 06.07.85

(51) Int. Cl.⁵ : **B 60 H   1/28**

(54) **Kraftfahrzeug.**

(30) Priorität : 01.08.84 DE 3428293

(43) Veröffentlichungstag der Anmeldung :
05.02.86 Patentblatt 86/06

(45) Bekanntmachung des Hinweises auf die Patenterteilung : 03.01.90 Patentblatt 90/01

(84) Benannte Vertragsstaaten :
AT CH DE FR GB IT LI SE

(56) Entgegenhaltungen :
EP--A-- 0 013 970
FR--A-- 2 445 776
US--A-- 4 521 050

(73) Patentinhaber : **Adam Opel Aktiengesellschaft**
**Bahnhofsplatz 1 Postfach 1560**
**D-6090 Rüsselsheim (DE)**

(72) Erfinder : **Detampel, Heinz**
**Moritz-von-Schwind-Strasse 22**
**D-6090 Rüsselsheim (DE)**
Erfinder : **Hillemann, Frank, Ing. (grad.)**
**Eifelweg 10**
**D-6094 Bischofsheim (DE)**
Erfinder : **Jobst, Wolfgang, Ing. (grad.)**
**Im Teich 94**
**D-6085 Nauheim (DE)**
Erfinder : **Prien, Manfred, Ing. (grad.)**
**Kirchenstrasse 4 a**
**D-6753 Enkenbach (DE)**

(74) Vertreter : **Rosenfeld, Jürgen, Dipl. Ing. et al**
**Adam Opel Ag Patentabteilung Bahnhofsplatz 1 Post-**
**fach 17 10**
**D-6090 Rüsselsheim (DE)**

EP 0 170 110 B1

## Beschreibung

Die Erfindung betrifft ein Kraftfahrzeug mit einer zwischen Haube, Kotflügeln, Windschutzscheibe und Scheibenwischerbauteil an Befestigungselementen angeordneten Windschutzplatte aus Kunststoff, wobei die Windschutzscheibe an der Stirnwand des Kraftfahrzeuges befestigt ist. (Siehe z. B. die FR-A-2 445 776).

Die Problematik einer solchen Windschutzplatte liegt in ihrer Befestigung an dem übrigen Kraftfahrzeug. So sind zunächst Fertigungstoleranzen der anliegenden bzw. benachbarten Einzelteile, wie der Windschutzscheibe, der Kotflügel, der A-Säulen, der Haube und der Scheibenwischer bzw. Scheibenwischerbauteile zu berücksichtigen. Hinzu kommt noch, daß außer diesen Einbautoleranzen vor allem die Materialausdehnung der Windschutzplatte zu berücksichtigen ist. So wird ein solches Kunststoffbauteil regelmäßig eine wesentlich von den übrigen Bauteilen aus Blech verschiedene Materialausdehnung besitzen. Gleichwohl darf die Windschutzplatte nicht zu locker befestigt werden, um ein Flattern derselben während der Fahrt sowohl infolge der Kraftfahrzeugerschütterungen als auch des Fahrtwindes auszuschalten.

Bislang wurde zur zuverlässigen Befestigung unter Berücksichtigung der verschiedenen Materialausdehnung die Windschutzplatte mit vielfachen Befestigungselementen aufwendig an dem Kraftfahrzeug montiert. Dies bedeutet hohe Produkt- und hohe Produktionskosten. Außerdem muß zur Berücksichtigung der unterschiedlichen Materialausdehnung auch zwischen der Windschutzscheibe und der Windschutzplatte eben zwischen diesen Teilen ein unbefriedigender Toleranzausgleich belassen sein.

Der Erfindung liegt die Aufgabe zugrunde, eine Windschutzplatte der eingangs genannten Gattung zu schaffen, die bei einwandfreier Befestigung unter minimalem Toleranzausgleich reparatur- und sichtfreundlich bei niedrigen Produkt- und Produktionskosten ist.

Diese Aufgabe wird erfindungsgemäß dadurch gelöst, daß die Windschutzscheibe über die Stirnwand frei hervorsteht und dort in einer U-Schiene angeordnet ist, die an der Windschutzplatte angeordnet ist. Es hat sich überraschenderweise gezeigt, daß trotz dieser im wesentlichen formschlüssigen Verbindung zwischen der Windschutzscheibe und der Windschutzplatte vermöge der U-Schiene bei der gegebenen unterschiedlichen Materialausdehnung eine einwandfreie, beständige Fixierung zwischen diesen Teilen gegeben ist. Dazu wird in der U-Schiene zwischen der Windschutzscheibe und derselben insbesondere ein Gummi-Profil angeordnet, das zudem für einen Kraftschluß zwischen der Windschutzscheibe und der U-Schiene und damit der Windschutzplatte sorgt. Die U-Schiene erscheint dem Betrachter als integraler Bestandteil der Windschutzplatte und bedeutet demgemäß eine sichtfreundliche Verbindung zwischen derselben und der Windschutzscheibe, die nicht als besonderes Bauteil dem Auge auffällt. Die Windschutzplatte erscheint somit nicht sichtbar an der Windschutzscheibe befestigt, was das windschlüpfrige bzw. stromlinienförmige Aussehen der Windschutzscheibenpartie mit der Windschutzplatte verstärkt. Damit verbunden ist die einfache Montagemöglichkeit, indem nämlich lediglich die U-Schiene an der Windschutzplatte auf die Windschutzscheibe aufzuschieben ist und damit nicht mehr einzelne Befestigungselemente zueinander zu zentrieren und zu montieren sind. Dementsprechend niedrig sind die Produktionskosten in dieser Hinsicht.

Gerade hinsichtlich der besonderen Materialausdehnung von Kunststoff bevorzugt ist, daß als Windschutzplatte ein linkes Teil derselben mit einer Zunge in einem Nutprofil eines rechten Teiles der Windschutzplatte mit Spiel angeordnet ist. Somit kann sich die Windschutzplatte beidteilig frei bewegen, was insbesondere auch hinsichtlich ihrer Befestigung an der übrigen Karosserie des Kraftfahrzeuges von Vorteil ist, die sich bekanntlicherweise unter den üblichen fahrmäßigen Beanspruchungen schon elastisch verformt und mit entsprechenden Verformungsbewegungen die Windschutzplatte belastet. Damit werden auch Produktionstoleranzen leicht aufgefangen. Die übrigen Befestigungselemente für die Windschutzplatte können damit mit geringerer Toleranz ausgelegt sein, weil eben die Teile der Windschutzplatte an dieselben individuell ausgerichtet werden können. Auch dies bedeutet eine verbesserte Befestigung bei geringeren Produktionskosten sowie eine höhere Servicefreundlichkeit.

Besonders vorteilhaft ist nunmehr, daß die Windschutzplatte an den Kotflügeln und dem Scheibenwischerbauteil an jeweils einem Befestigungselement angeordnet ist. Damit ist die Windschutzplatte außer an der Windschutzscheibe nur noch an drei Punkten aufgehängt, was als minimale Befestigung in einer Ebene anzusehen ist. Demgemäß sind die Produktionskosten sowie die Produktkosten nach der Erfindung minimal bei großer Servicefreundlichkeit.

Ein Ausführungsbeispiel der Erfindung ist in den Figuren dargestellt.

Es zeigen :

Fig. 1 die Draufsicht auf eine erfindungsgemäße Windschutzplatte ;

Fig. 2 den Querschnitt entlang der Schnittlinie B-B in Fig. 1 ;

Fig. 3 den Querschnitt entlang der Schnittlinie M-M in Fig. 1 ;

Fig. 4 den Querschnitt entlang der Schnittlinie J-J in Fig. 1 ;

Fig. 5 den Querschnitt entlang der Schnittlinie A-A in Fig. 1.

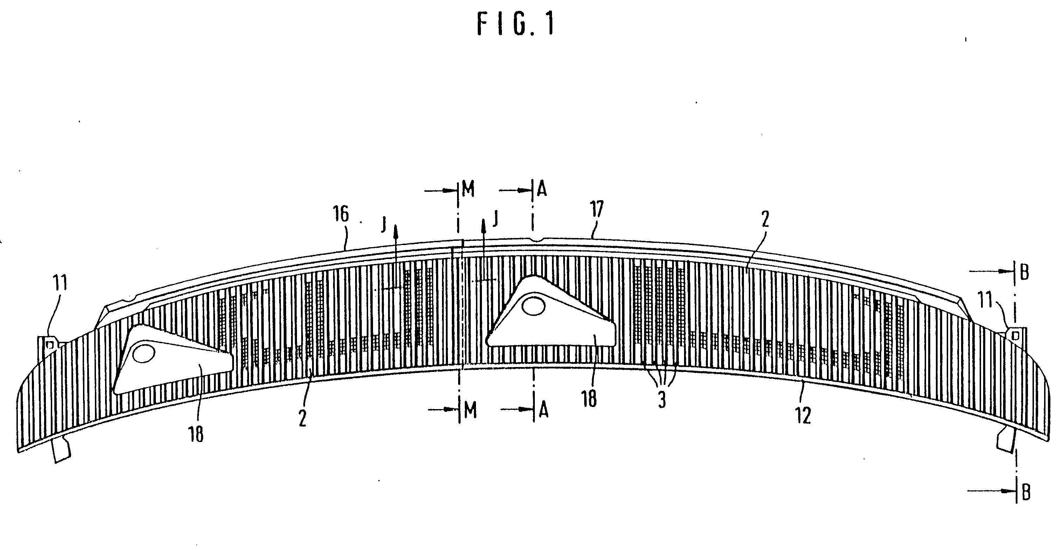

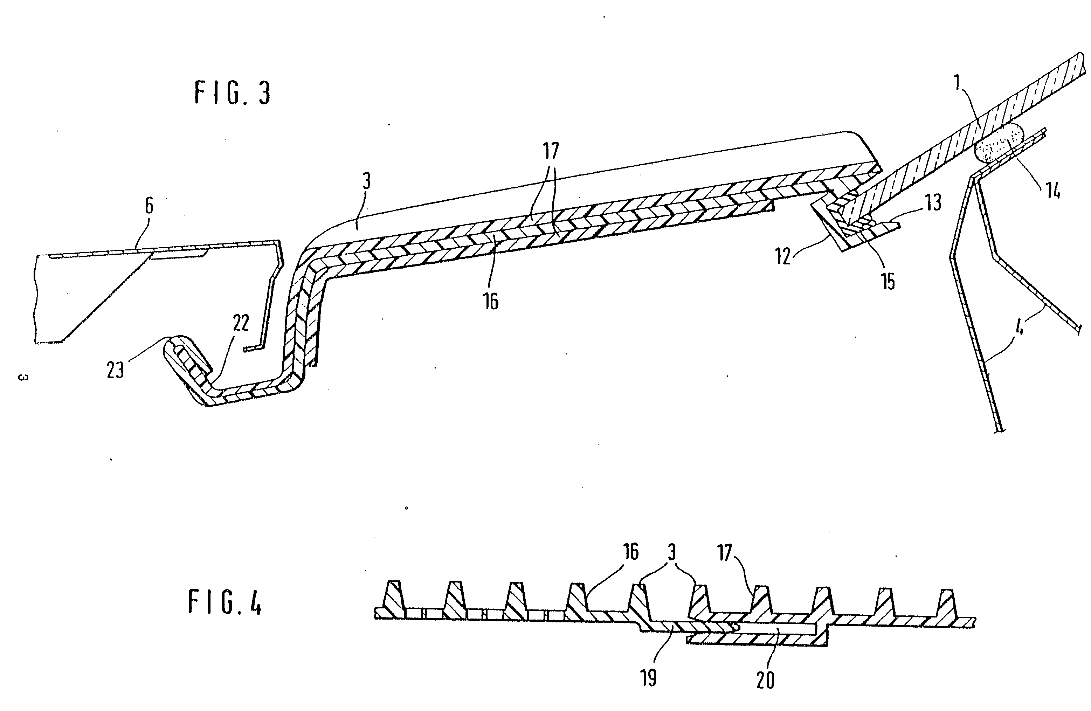

In Fig. 1 ist die Windschutzplatte 2 in Draufsicht dargestellt. Nur schwer zu erkennen ist, daß sie aus einem linken Teil 16 und einem rechten Teil 17 besteht, die nach Art einer Nut-Federverbindung ineinander geschoben sind; diesbezüglich muß zur Verdeutlichung auf die Figuren 3 und 4 verwiesen werden. Deutlich zu erkennen sind Vertiefungen 18 zur Aufnahme von dem Übergang der Scheibenwischerwellen auf die Scheibenwischerarme sowie des Durchtrittes der Scheibenwischerwellen durch die Windschutzplatte 2 selbst. Die Windschutzplatte 2 besitzt Rippen 3, die späterhin in der Fahrt- bzw. Längsrichtung des Kraftfahrzeuges liegen. Jeweils an den Enden der Windschutzplatte 2 sind zu erkennen die Laschen 11 zur Aufnahme der Befestigungselemente an den Kotflügeln, die allerdings nicht dargestellt sind. Die U-Schiene zur Aufnahme der ebenfalls nicht zu erkennenden Windschutzscheibe ist mit der Bezugsziffer 12 gekennzeichnet und als solche im wesentlichen in Blickrichtung der Figur gesehen unter der Windschutzplatte 2 angeordnet.

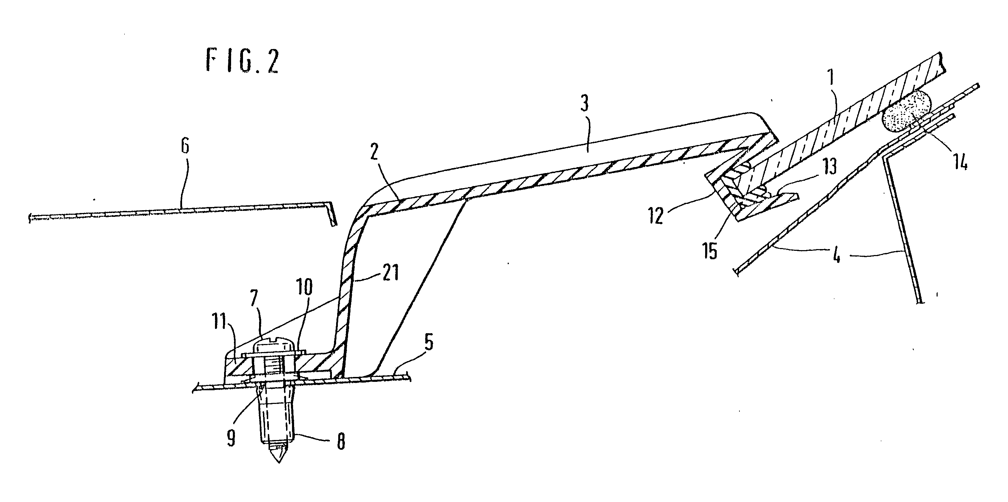

In Fig. 2 ist der Querschnitt entlang der Schnittlinie B-B aus Fig. 1 dargestellt. Deutlich ist zu erkennen, wie die Lasche 11 geschnitten ist. In dieser Lasche 11 ist eine Blechschraube 7 mit einer Unterlegscheibe 10 angeordnet, die den Kotflügel 5 in einem Loch 9 durchtritt und hinter dem Kotflügel 5 von einer Einsteckmutter 8 gegen denselben gehalten wird. Die Lasche 11 ist an der Windschutzplatte 2 an einem geeignet abgewinkelten und erstreckten Wandteil 21 angeformt. Dieses Wandteil 21 erstreckt sich unter die Haube 6, die ansonsten im wesentlichen flächenbündig mit der Windschutzplatte 2 abschließt. Ebenfalls im wesentlichen flächenbündig schließt die erfindungsgemäße Windschutzplatte 2 auch mit der Windschutzscheibe 1 ab, indem die Windschutzscheibe 1 in die U-Schiene der Windschutzplatte 2 greift. Die U-Schiene liegt dazu auf der einen Seite der Windschutzplatte, nämlich auf derselben wie das Wandteil 21, also zum Kraftfahrzeuginneren hin; dies bedeutet für die U-Schiene 12, daß sie zu der Stirnwand 4 des Kraftfahrzeuges hin benachbart liegt. Die Windschutzscheibe 1 ist in an sich bekannter Weise mit einem Kleber 14 an der Stirnwand 4 befestigt. In der Nut 13 der U-Schiene 12 liegt die Windschutzscheibe 1 vermöge eines Gummis 15, das für einen ausgleichsfähigen Kraftschluß zwischen der Windschutzscheibe 1 und der U-Schiene 12 und damit der Windschutzplatte 2 sorgt.

In der Fig. 3 ist der Querschnitt entlang der Schnittlinie M-M aus Fig. 1 dargestellt. Hier ist nun insbesondere zu erkennen, wie das linke Teil 16 und das rechte Teil 17 der Windschutzplatte 2 ineinander angeordnet sind. Dazu besitzt das rechte Teil 17 ein Nutprofil, in dem die Zunge des linken Teiles 16 angeordnet ist, wozu noch auf Fig. 4 verwiesen sei. In seiner sonstigen relativen Lage bezüglich des linken Teiles 16 wird das rechte Teil 17 von einem Winkelprofil 23 gehalten, das einen Randwinkel 22 an dem rechten Teil 17 einschließt.

In Fig. 4 ist der Schnitt entlang der Schnittlinie J-J aus Fig. 1 dargestellt. Hier läßt sich nun erkennen, wie die Zunge 19 des linken Teiles 16 der Windschutzplatte 2 in das Nutprofil 20 des rechten Teiles 17 der Windschutzplatte 2 eingreift und damit eine freie Dehnungsmöglichkeit für die Windschutzplatte 2 geschaffen ist.

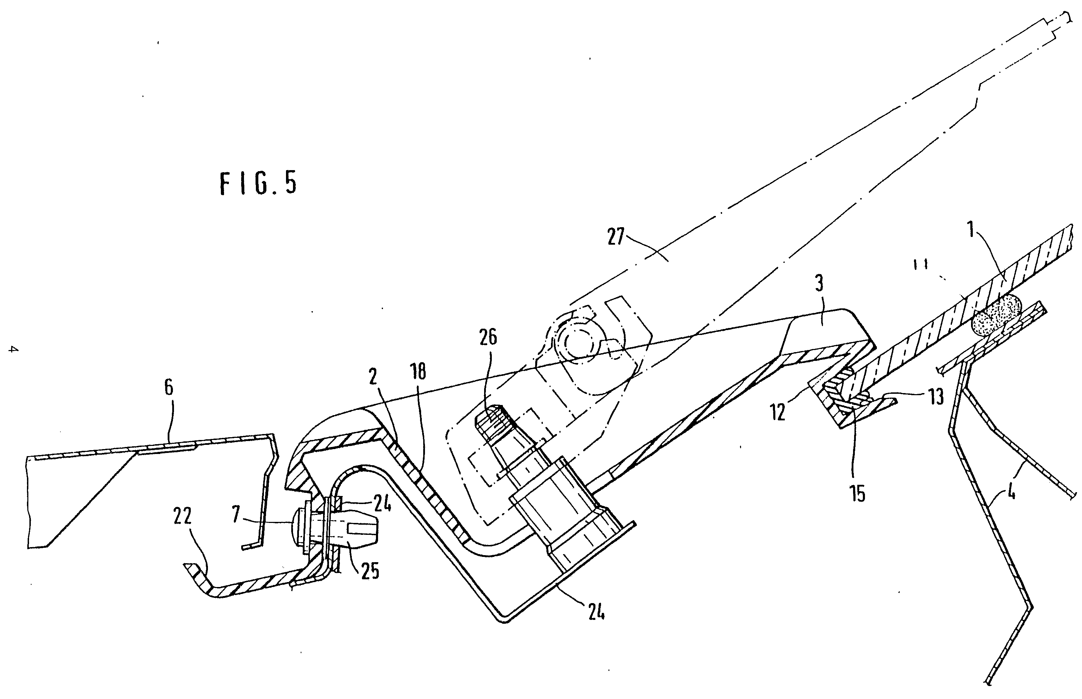

In Fig. 5 schließlich ist der Querschnitt entlang der Schnittlinie A-A aus Fig. 1 dargestellt. Hier ist die Windschutzplatte 2 an dem Wischerhalter 24 vermöge einer Blechschraube 7 und einer Einsteckspreizmutter 25 befestigt. Der Wischerhalter 24 lagert auch die Wischerwelle 26 mit dem Wischerarm 27. Die letztgenannten Teile liegen in der Vertiefung 18 in dem Windschutz 2. Die Blechschraube 7 durchtritt die Windschutzplatte 2 im Bereich des Randwinkels 22 in im wesentlichen an sich bekannter Wrise. Ansonsten ist wie in den Fig. 2 und 3 zu erkennen, wie die Windschutzscheibe 1 über die Stirnwand 4 des Kraftfahrzeuges frei hervorsteht, an der sie ansonsten mit einem Kleber 14 in an sich bekannter Weise befestigt ist. Die Windschutzscheibe 1 ragt dort, wie schon dargestellt und beschrieben, in die Nut 13 der U-Schiene an der Windschutzplatte 2, wo sie vermittels eines Gummis 15 außerdem kraftschlüssig, jedoch dehnungsmöglich gelagert ist.

Zeichenerklärung

| | |
|---|---|
| 1 | Windschutzscheibe |
| 2 | Windschutzplatte |
| 3 | Rippe |
| 4 | Stirnwand |
| 5 | Kotflügel |
| 6 | Haube |
| 7 | Blechschraube |
| 8 | Einsteckmutter |
| 9 | Loch |
| 10 | Unterlegescheibe |
| 11 | Lasche |
| 12 | U-Schiene |
| 13 | Nut |
| 14 | Kleber |
| 15 | Gummi |
| 16 | linkes Teil |
| 17 | rechtes Teil |
| 18 | Vertiefung |
| 19 | Zunge |
| 20 | Nutprofil |
| 21 | Wandteil |
| 22 | Randwinkel |
| 23 | Winkelprofil |
| 24 | Wischerhalter |
| 25 | Einsteckspreizmutter |
| 26 | Wischerwelle |
| 27 | Wischerarm |

**Patentansprüche**

1. Kraftfahrzeug mit einer zwischen Haube (6), Kotflügeln (5), Windschutzscheibe (1) und Scheibenwischerbauteil an Befestigungselementen angeordneten Windschutzplatte (2) aus Kunststoff, wobei die Windschutzscheibe (1) an der Stirnwand (4) des Kraftfahrzeuges befestigt ist, dadurch gekennzeichnet, daß die Windschutzscheibe (1) über die Stirnwand (4) frei hervorsteht und dort in einer U-Schiene (12) angeordnet ist, die an der Windschutzplatte (2) angeordnet ist.

2. Kraftfahrzeug nach Anspruch 1, dadurch gekennzeichnet, daß als Windschutzplatte (2) ein linkes Teil (16) derselben mit einer Zunge (19) in einem Nutprofil (20) eines rechten Teiles (17) der Windschutzplatte (2) mit Spiel angeordnet ist.

3. Kraftfahrzeug nach Anspruch 1 oder 2, dadurch gekennzeichnet, daß die Windschutzplatte (2) an den Kotflügeln (5) und dem Scheibenwischerbauteil an jeweils einem Befestigungselement angeordnet ist.

## Claims

1. Motor vehicle with a wind protection plate (2) made of plastic mounted on fastening elements between bonnet (6), wings (5), windscreen (1) and windscreen wiper component, the windscreen (1) being attached to the dashboard (4) of the vehicle, characterised in that the windscreen (1) projects freely over the dashboard (4) and is there disposed in a U-rail (12) which is disposed on the wind protection plate (2).

2. Motor vehicle according to claim 1, characterised in that as the wind protection plate (2), a left portion (16) thereof is disposed with play by a tongue (19) in a groove profile (20) of a right portion (17) of the wind protection plate (2).

3. Motor vehicle according to claim 1 or 2, characterised in that the wind protection plate (2) at the wings (5) and the windscreen wiper components is mounted in each case at a fastening element.

## Revendications

1. Véhicule automobile comprenant, entre le capot (6), les ailes (5), la glace pare-brise (1) et l'essuie-glace, une plaque pare-brise (2) en matière plastique disposée sur des éléments de fixation, la glace pare-brise (1) étant fixée sur la paroi frontale (4) du véhicule automobile, caractérisé par le fait que la glace pare-brise (1) dépasse librement au-delà de la paroi frontale (4) et est disposée en cet endroit dans un rail en U (12) qui est disposé lui-méme sur la plaque pare-brise (2).

2. Véhicule automobile selon la revendication 1, caractérisé par le fait que, en tant que plaque pare-brise (2), une partie gauche (16) de celle-ci, munie d'une languette (19), est disposée avec un certain jeu, dans un profilé rainuré (20) d'une partie droite (17) de ladite plaque pare-brise (2).

3. Véhicule automobile selon la revendication 1 ou 2, caractérisé par le fait que la plaque pare-brise (2) est disposée sur chaque fois un élément de fixation monté sur les ailes (5) et l'essuie-glace.

FIG.1

FIG.2

FIG. 3

1

17

3

6

12

13

15

14

4

16

22

23

3

EP 0 170 110 B1

FIG. 4

16   3   17

19   20

FIG.5